(19) Europäisches Patentamt
European Patent Office
Office européen des brevets

(11) **EP 0 676 049 B1**

(12) **EUROPEAN PATENT SPECIFICATION**

(45) Date of publication and mention
of the grant of the patent:
**19.03.1997 Bulletin 1997/12**

(51) Int Cl.6: **G01N 23/06, A01D 33/08**

(21) Application number: **94903737.8**

(86) International application number:
**PCT/DK93/00417**

(22) Date of filing: **10.12.1993**

(87) International publication number:
**WO 94/15200 (07.07.1994 Gazette 1994/15)**

(54) **A METHOD OF MEASURING THE EARTH ON AGRICULTURAL CROPS, SUCH AS BEETS**

METHODE ZUR MESSUNG DER ERDE AUF AGRARPRODUKTEN WIE RÜBEN

PROCEDE DE MESURE DE LA TERRE PRESENTE SUR DES CULTURES AGRICOLES, TELLES QUE DES BETTERAVES

(84) Designated Contracting States:
**AT BE CH DE ES FR GB GR IE IT LI NL PT SE**

(30) Priority: **23.12.1992 DK 1557/92**

(43) Date of publication of application:
**11.10.1995 Bulletin 1995/41**

(73) Proprietor: **DANISCO A/S**
**DK-1411 Copenhagen K. (DK)**

(72) Inventors:
• **JORGENSEN, Lars, Bo**
**DK-4800 Nykobing F (DK)**

• **THOMASSEN, Jesper**
**DK-4913 Horslunde (DK)**

(74) Representative: **Siiger, Joergen et al**
**c/o Chas. Hude**
**H.C. Andersens Boulevard 33**
**1553 Copenhagen V (DK)**

(56) References cited:
**GB-A- 1 385 573          US-A- 4 359 639**

**Description**

Technical Field

The invention relates to a method of measuring the earth on agricultural crops, such as beets, on the basis of absorption measurements of $y$-rays of a varying energy, said method utilizing the fact that high-energy rays are absorbed to an equal extent by earth and beets whereas low-energy rays are most absorbed by earth, minerals, and stones and less absorbed by organic beet material and water.

Background Art

The Eastern-German Publication "Isotopen Praxis", pages 58 to 64 discloses a method and an apparatus for determining the earth content on potatoes by an absorption measurement and by means of $y$-rays of a varying energy. High-energy radiation of an energy of for instance 6662 keV from a Cs-137 source is equally absorbed by earth and potatoes whereas low-energy radiation of an energy of 60 keV from an Am-241 source is most absorbed by hard materials, such as earth minerals and stones. The measuring results depend on the nature of the earth and are not sufficiently accurate.

From US-A-4 359 639 it is known to use two gamma beams, one of low and the other of high energy, for making such a measurement. Such a method is based on the realization that high energy gamma rays attenuate to an equal extent for both soil and the other material, whereas at low energies the soil absorbs the gamma rays to a much greater extent than organic materials or water.

Brief Description of the Invention

The object of the invention is to provide a method of the above type for measuring earth on beets, said method providing results which are more accurate than previously known.

A method of the above type is according to the invention characterised by compensating for the mineral composition and the water content of the earth by a quantity of the earth having been attached to the beets being subjected to a measurement of the amount of hard material relative to the total amount of earth so as to determine a compensation factor, the earth percentage determined at the first measurement being divided with said compensation factor.

If only the first measuring was performed, the result would be a too high content of beets as a portion of the earth possesses the same absorption qualities as the beet material. The resulting earth percentage is therefore too low, which, however, can be compensated for by a corresponding separate measuring being performed on the earth, whereby, popularly speaking, the apparent quantity of "beet material" contained in the earth is measured. This is called the compensation factor. When the first measuring has resulted in a beet/earth mixture containing a specific quantity of earth, it is therefore necessary to divide with the compensation factor in order to find the correct quantity of earth.

Furthermore according to the invention the second measuring may be performed by the beet/earth mixture after the first absorption measurement being subjected to a dry cleaner, where an amount of the loose earth and minor stones is removed from the beets and subjected to a corresponding absorption measurement so as to provide the compensation factor.

Below reference is made to a report dated 10 January 1991 from the Danish Isotope Centre defining R as the ratio of logarithms to the attenuations of the rays. This report forms part of the present description.

Brief Description of the Drawing

The invention is described in greater detail below with reference to the accompanying drawings, in which

Fig. 1 illustrates the positioning of a split sampler at Nakskov Sukkerfabrik,

Fig. 2 is a cross-sectional view through the sampler,

Fig. 3 illustrates a drum washer,

Fig. 4 illustrates the R-value relative to the earth percentage at a conveyor speed of 0.54 m/sec,

Fig. 5 illustrates the R-value relative to the earth percentage at a conveyor speed of 0.30 m/sec,

Fig. 6 illustrates the R-value relative to the earth percentage at a conveyor speed of 0.30 m/sec, where only three detectors are used,

Fig. 7 shows the results of a test washing compared to the results of a drum washing,

Fig. 8 illustrates the actual earth percentage relative to the measured earth percentage at various water contents in the earth,

Fig. 9 illustrates an apparatus for determining the earth percentage and comprising two measuring systems, and

Fig. 10 a second embodiment of the apparatus of Fig. 9.

<u>Best Mode for Carrying Out the Invention</u>

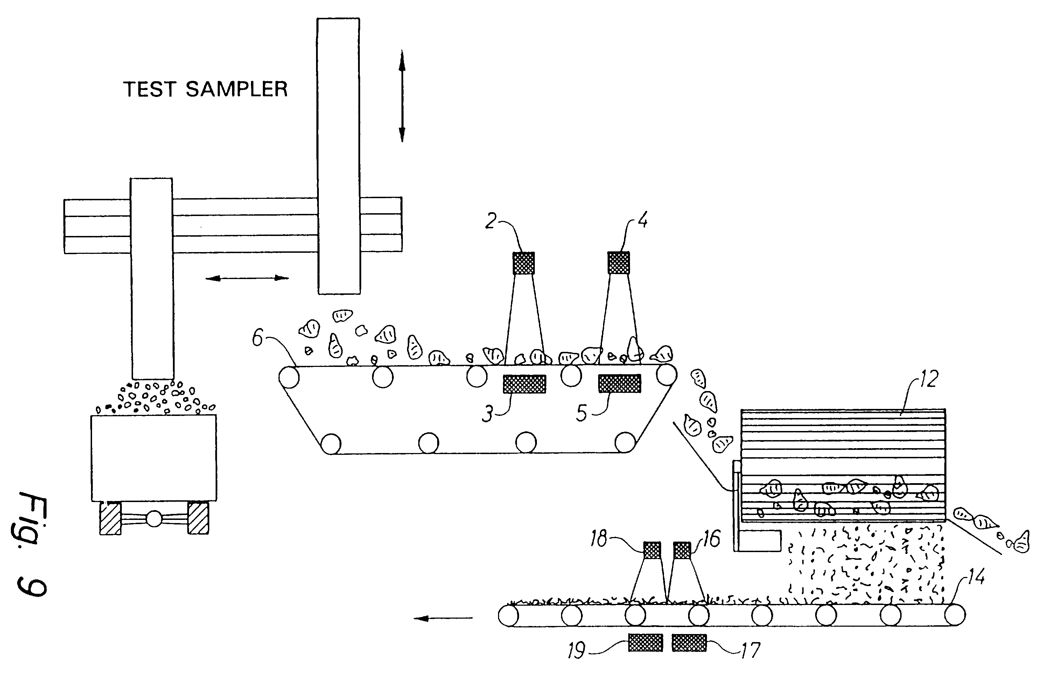

The apparatus of Fig. 9 comprises two measuring systems. The first measuring system indicates the content of earth and stones in a beet sample and is performed by a measuring of the $y$-ray absorption in the beet sample by means of two types of $y$-rays of different energies. The second measuring system indicates the composition of the content of earth and stones in the sample by measuring the $y$-ray absorption in an earth/stone sample removed from the beet sample. The second measuring system employs the same two energies of $y$-rays as the first measuring system. The measuring values from the first and the second measuring system are combined to form a quantitative measurement of the earth/stone content in the sample.

The beets are delivered to a sugar plant by waggons, and the samples are removed therefrom to determine the content of beets. The samples contain 30 to 120 kg. Each sample is subjected to an analysis of the content of pure beet components and impurities primarily being earth and stones.

Previously the measurings of the content of earth and stones were performed by initially weighing the sample and subsequently washing said sample with water. The pure beet sample was then weighed again. The difference between the weight prior to and after the washing indicates the degree of impurity, which is typically 5 to 15%. Such a procedure involves rather much work and results in a high amount of waste water.

The method according to the invention utilizes the density difference between beets and earth. Furthermore, a compensation for variations in the composition of the earth is carried out. Two measuring systems A and B are used. System A provides a quantitative measurement of the content of earth and stones, whereas system B provides a quantitative measurement of the composition of earth and stones. By combining the measuring values from the systems A and B, a more accurate measurement is obtained of the earth/stone content than by system A alone.

Initially system A subjects the mixture of beet and earth to a high-energy $y$-radiation emitted by the isotope Cs-137 and subsequently to a comparatively lower $y$-energy emitted by the isotope Am-241. The absorption of the two $y$-energies in the beet/earth mixture is measured by means of detectors counting the number of $y$-quantums in a predetermined period, said $y$-quantums being transmitted through the beet/earth mixture to the detector. The high-energy $y$-radiation is selected such that it is attenuated to an almost equal extent by beets and earth. The counting number from the high-energy detector can accordingly be considered a measurement of the total mass between the isotope and the detector. The low $y$-energy is selected such that it is most absorbed by earth minerals and stones and only to a minor extent by organic beet material and water. The counting number from the low-energy detector can therefore be considered a measurement of the mass of earth and stones between the isotope and the detector. Therefore the ratio of the low-energy counting number to the high-energy counting number for the same mass (beet/earth mixture) represents a direct measurement of the concentration of earth and stone minerals in the beet/earth mixture.

The measuring system A can be structured in two different ways A1 and A2. According to the structure A1, the two isotopes, 2, 4 are arranged about 0.5 m above a rubber conveyor belt 6, the distance between the isotopes 2, 4 being about 0.5 m. A detector 3, 5 is placed in the axis of radiation of each isotope approximately 10 cm below the conveyor belt 6. The beet/earth mixture from the sampler is placed on the conveyor belt 6 and advanced at a speed of about 0.5 m/sec initially past the high-energy isotope/detector system 2, 3 and subsequently past the low-energy isotope detector system 4, 5. The counting numbers of the two detectors are registered in the period in which the earth/beet mixture passes through the measuring system. The counting numbers from the detectors are transmitted to a calculating unit (not shown) compensating for background radiation. The background radiation is the counting numbers for an empty conveyor belt 6. The calculating unit divides the background-compensated high-energy counting number with the background-compensated low-energy counting number, whereby a measurement of the earth and stone concentration in the mixture is obtained.

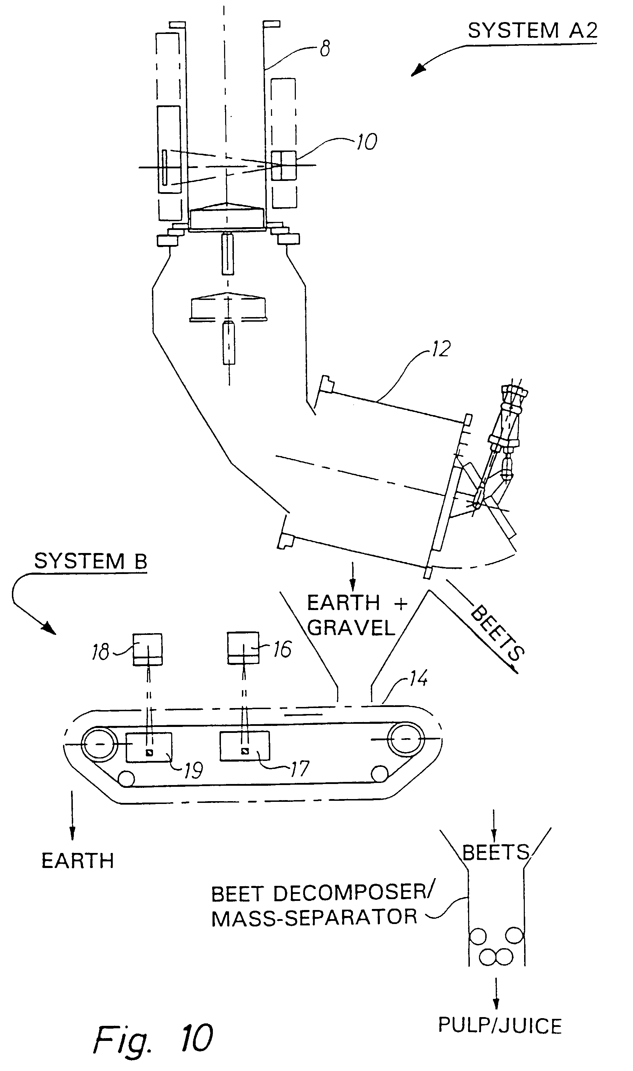

According to structure A2, cf. Fig. 10, the two isotope sources/detectors are placed about a cylindrical container 8 of a diameter of about 35 cm and a height of about 90 cm. Approximately 40 kg of beet/earth mixture is placed in the container 8. The two sources/detectors are arranged on the same plane, but staggered 90° in such a manner that the two $y$-sources emit in intersecting directions through the container 8 containing the beet/earth mixture. The container 8 is made of rubber or aluminium so as to avoid an unnecessary attenuation of the $y$-radiation. The two sources and the two detectors are arranged on a common frame 10, which during a measuring is moved from the lower portion to the upper portion of the container 8 at a constant speed. During the upward movement of the isotope/detector system 10, the cylindrical container 8 is rotated at a constant speed of rotation. As a result a very large portion of the cylinder surface and consequently the beet/earth mixture is subjected to a radiation by the two $y$-energies. This structure A2 provides measuring values of the concentration of earth/stones with a higher statistic accuracy than the A1 structure.

In other words the measuring system A (A1 or A2) provides a quantitative measurement of the earth/stone concentration in the mixture. The nature and the chemical composition of the earth may, however, vary. Earth containing a high amount of lime and a low amount of water results in a higher absorption of the same $y$-energy than earth containing a high amount of organic substance (humus) and a high amount of water. Such variations reduce the accuracy of the measuring system A. An additional measuring system B is used for correcting the measurings of the system A.

According to the measuring system B, the beet/earth mixture is transferred from the measuring system A to a dry cleaner 12, in which a quantity of the loose earth and minor stones is removed from the beets. The dry cleaner 12 is formed by an inclining cylindrical drum comprising two cylindrical surfaces interconnected by means of a plurality of thin bars allowing the earth knocked off the beets to fall out therebetween. The earth is collected on a conveyor belt 14 therebelow and conveyed through a measuring system 16, 17, 18, 19 corresponding to A1. As a result, the ratio of the hard to the soft components of the earth is determined, i.e. the actual mineral concentration of the earth. This measurement of the composition of the earth is used for correcting the measuring value provided by means of the measuring system A. When the measuring system A has indicated a low earth percentage and the system B indicates that the earth contains a high amount of water or organic material, the value of the system A is corrected to a higher earth percentage. However, when the measuring system A indicates that the earth percentage is low and the measuring system B indicates that the earth contains a high amount of lime, the value of the measuring system A is corrected to a lower earth percentage, cf. the following explanation.

Tests were performed of a measuring of the earth percentage by means of $y$-radiation. The tests revealed that the $y$-method agrees well with the earth percentage in a 30 kg sample. It was possible to determine the earth percentage with an accuracy of ± 2%.

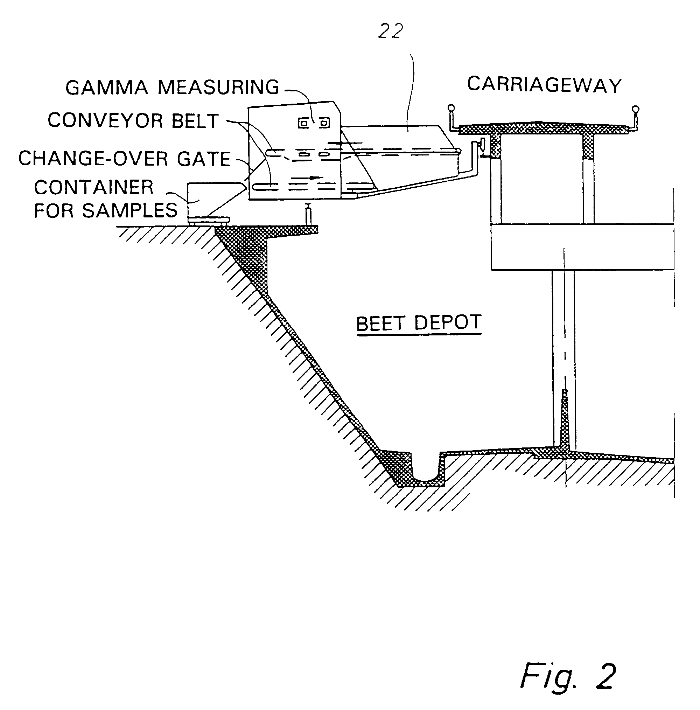

A split sampler 22, cf. Fig. 2, was built, in which a measuring system was installed. The split sampler 22 was placed at a sugar plant and a measuring of loads of beet was performed. It was desired to optimize the measuring system and to test the measuring accuracy in connection with a measuring of loads of beets containing earth of various compositions and various contents of water.

The tests indicated that it was possible to measure the earth percentage with an accuracy of 2%.

The tests indicated furthermore that the measuring system presents the highest accuracy when five detectors are used in each detector unit and when the conveyor speed in the test sampler 22 is 0.54 m/sec. When only three detectors are used in each detector unit, the standard deviation (the measuring inaccuracy) is increased to no more than 2.1%.

The smallest standard deviation measurable by the measuring system at a conveyor speed of 0.54 m/sec was 1.1 %. The standard deviation was determined by repeated tests on sacks containing the same amount of beets and earth.

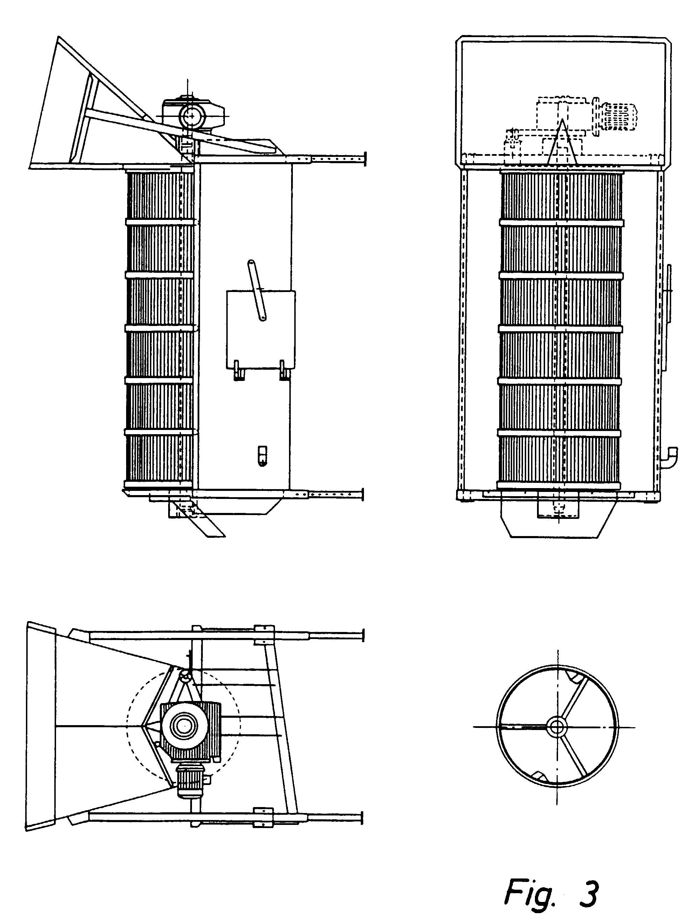

A drum washer 24, cf. Fig. 3, was used for washing the samples of a weight of 250 to 700 kg removed in containers from the sampler 22. The washing served to determine the reference earth percentages.

It was examined whether such a measuring system would result in an unfair treatment of some beet growers compared to other growers.

The simple measuring system cannot detect the water content of the earth, said water content having an effect on the measuring inaccuracy. The chemical composition of the earth has also an effect on the measuring inaccuracy. A compensation for these factors necessitates the use of an additional system capable of measuring a separate quantity of earth without beets. This combined system is shown in Fig. 9. The combined system can half the standard deviation relative to the standard deviation associated with the simple system.

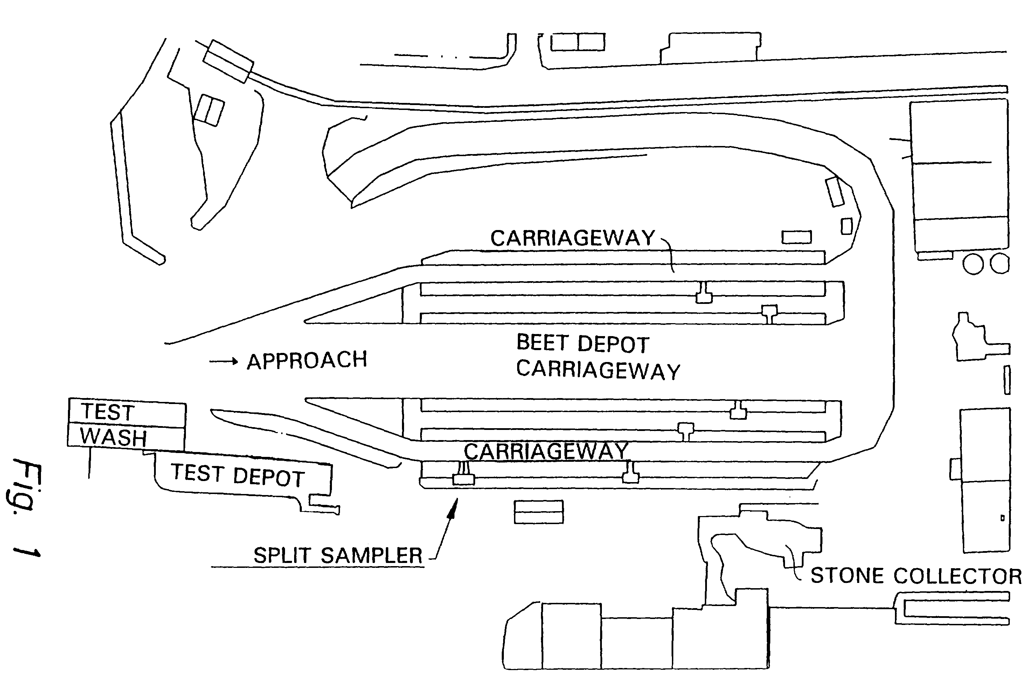

Fig. 1 shows the positioning of the split sampler 22. It appears, that it can only receive loads of beets from tractors or lorries tipping to the right.

Fig. 2 is a cross-sectional view through a split sampler 22 in connection with a carriageway and a beet depot therebelow.

The sources and the detectors are the same as the ones described above. The detector units have, however, been extended in such a manner that each detector unit includes five detector tubes. In addition, collimators are coupled between the detector tubes. The five detector tubes were installed in such a manner that they can detect $y$-radiation across a width of 375 mm and thereby cover 70% of the width of the conveyor belt.

During a measuring, the sample passes the measuring system and is then collected in a container, cf. Fig. 2. The measuring system is controlled by an operator. The measuring data are transmitted to a portable personal computer. The earth percentage of the sample must furthermore be determined by way of a conventional washing for the calibration of the measuring system, and for this purpose a drum washer, cf.

Fig. 3, was used. A washing in this drum washer was carried out in 20 min.

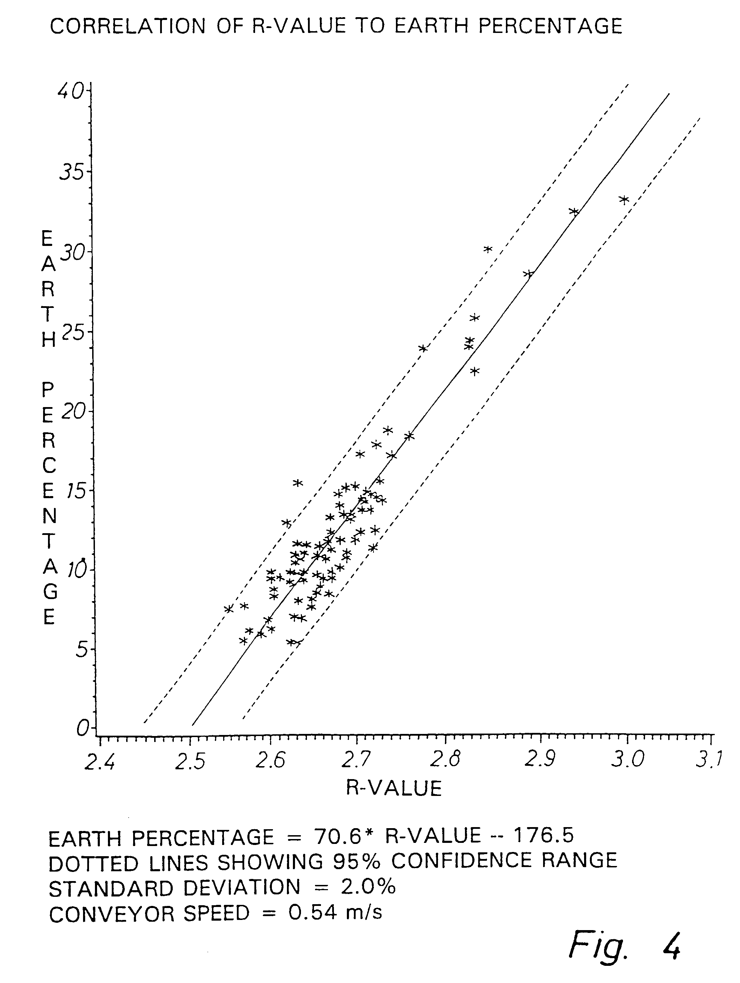

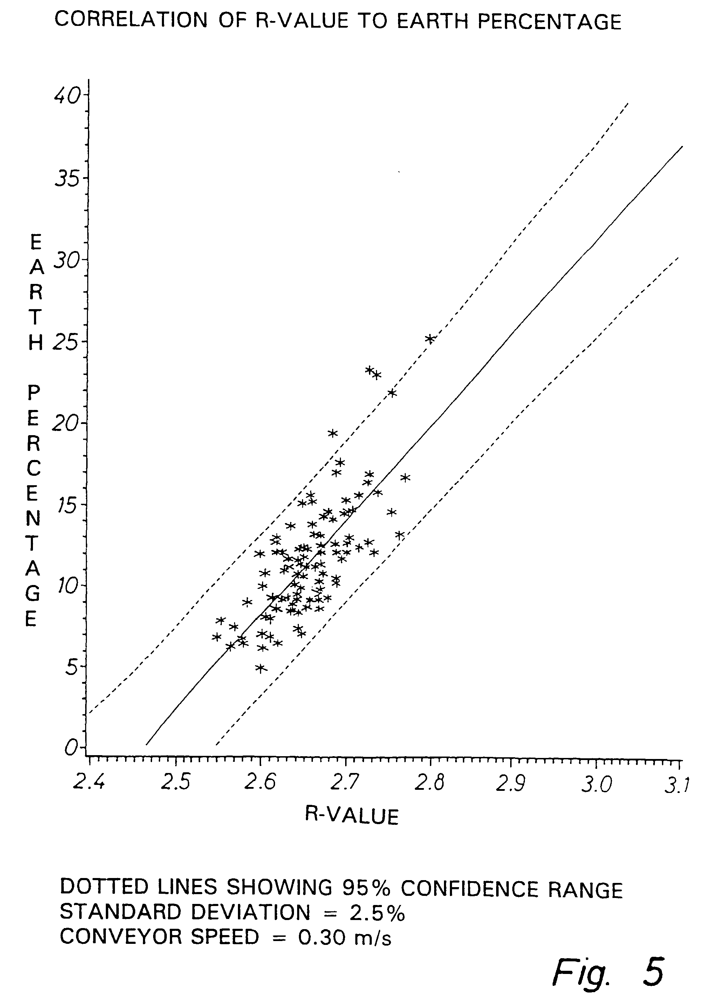

During the optimizing of the measuring system in the split sampler 22 it was desired to determine the conveyor speed resulting in the highest measuring accuracy. Figs. 4 and 5 show the results at conveyor speeds of 0.54 m/sec and 0.30 m/sec, respectively.

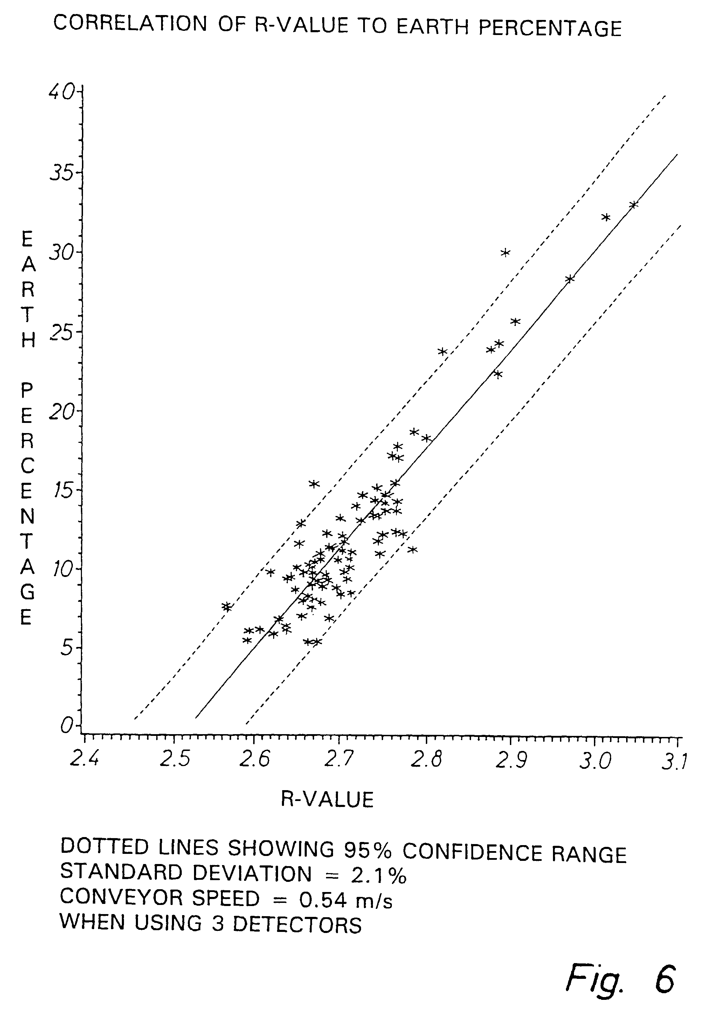

The measuring values of each detector tube are stored, and accordingly it is possible to test the effect of using only three tubes instead of five detector tubes, the result of said test appearing from Fig. 6.

Table 1 shows the results of some sack tests. The sack tests served to illustrate the improved reproducability resulting from the extended measuring system. The same beets and the same earth were used in repeated tests.

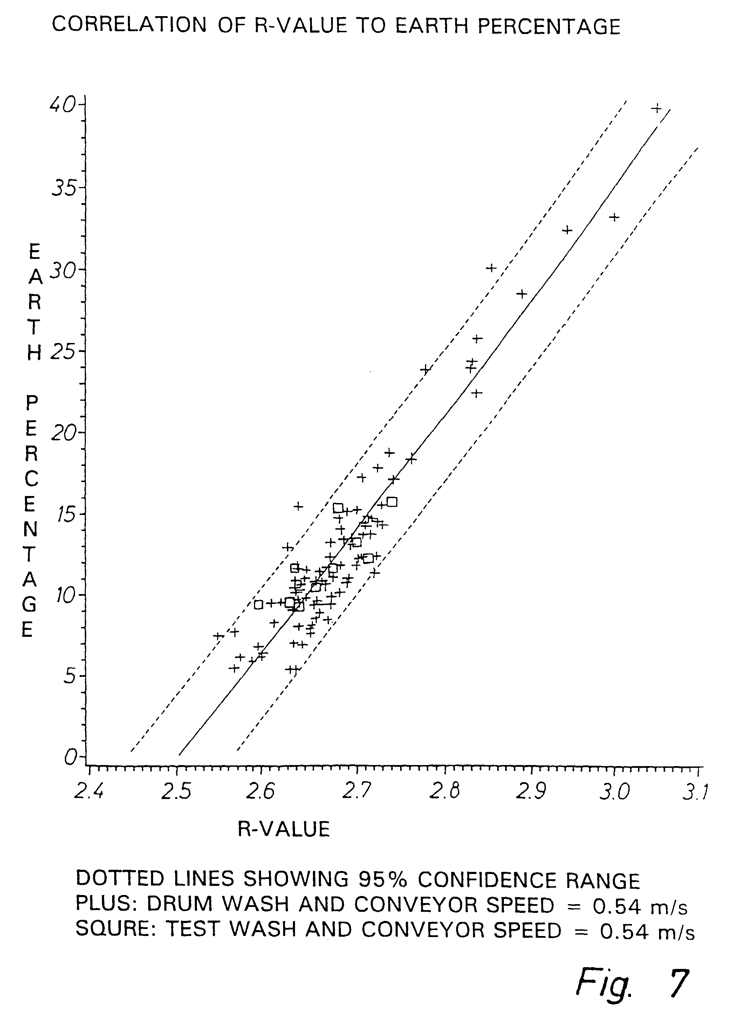

The data processing and the evaluation of the measuring system are conditioned by the earth percentage determined during the drum washing being correct and comparable with the test washing. The results of the drum washing and the test washing are compared in Fig. 7.

Tests were performed at a conveyor speed of 0.54 m/sec, and Fig. 4 shows the results. The R-value from the measuring system has been determined on the basis of the $y$-counting numbers for the five detector tubes. The earth percentage is determined on the basis of the gross weight and the net weight after a drum washing.

It appears from the Figure that samples containing up to 40% earth have been measured. Samples containing more than 20% earth have been specially provided by the beet lorry being supplied with additional earth before the unloading.

When the conveyor speed is 0.54 m/sec, the accuracy of the measuring system is set to 2.0% corresponding to half of 95% confidence range.

Tests were furthermore performed at a conveyor speed of 0.30 m/sec., the results appearing from Fig. 5. In this case it appears that the earth percentage can be determined with an accuracy of 2.5%.

In other words, the result was poorer than the result obtained at a conveyor speed of 0.54 m/sec. The poor result was mainly due to the fact that sometimes the layer thickness of beets and earth was so thick that the radiation of the soft source had difficulty in penetrating through said layer.

The conclusion was that a conveyor speed of 0.54 m/sec provides the best results. When the conveyor speed is further increased, the beets roll on the belt and thereby cause an increased measuring inaccuracy.

The previously described test results have resulted in the two outermost detector tubes of the detector units not forming part of the system with the effect that a measuring accuracy of 2.1 % is found. Accordingly the increase of the standard deviation is only 0.1 % relative to the measurings performed by means of five detector tubes.

As mentioned above, tests have been performed on sacks containing the same beets and the same earth so as to determine the reproducability of the measuring system. Table 1 shows the test results. Two repetitions are indicated for each of the four tests.

Table 1

| Conveyor speed | Earth percentage | Standard deviation |
| --- | --- | --- |
| 0.30 m/s | 0% | 0.9% |
| 0.30 m/s | 11.6% | 0.6% |
| 0.54 m/s | 0% | 1.3% |
| 0.54 m/s | 11.6% | 1.1% |

It appears from Table 1 that the standard deviation is lowest at a conveyor speed of 0.30 m/s compared to 0.54 m/sec, which contradicts the previous conclusion. The reason is probably that the tests on sacks involve no problems of a too high layer of beets and earth on the conveyor belt, which was the case when the beets were tipped off a lorry. It is a question of optimizing the layer thickness at the source intensity in question where the layer thickness is determined by the conveyor speed.

The standard deviation at a conveyor speed of 0.54 m/sec is as far as the sack tests are concerned 0.7 to 0.9% lower than by tests where the beets are tipped off a lorry. This difference is due to several factors; the beets and the earth move on the conveyor belt. In addition, the chemical composition and the water content of the earth vary when the beet loads are delivered by various beet growers.

In order to ensure that the drum washer washes the beets in the same manner as the sample washing, ten tests were carried out with the loads being tipped off and measured in the new split sampler. Subsequently, the samples were placed in 8 to 20 separate sample containers. The ten large samples were thus placed in 130 containers and moved through the test washing.

The earth percentages measured in the test washing are comparable with the earth percentages determined by the $y$-transmission in the split sampler. An agreement indicates that the drum washing corresponds to the test washing.

Fig. 7 shows the result of the test washing compared with the results of the drum washing, the latter results also appearing from Fig. 4. The R-value is determined by the measuring system. It appears from Fig. 7 that the results of the drum washing are in agreement with the results of the test washing.

Three factors have a vital effect on the accuracy of the measuring system, viz. the composition and the water content of the earth and the reproducability of the system.

The composition of the earth

The composition of the earth has an effect on the accuracy of the measuring system. When beets with 10% clay soil thereon are correctly measured, beets with 10% pure calcareous silt are registered as 15% clay soil.

The variations in the composition of the earth are, however, not only a question of variation in lime content. Humus (organic material) is for instance not recognized as earth, but as beets.

It is found that the composition of the earth contributes to the inaccuracy of the measuring system by ±0.5% earth. The inaccuracy is not unsysthematic/arbitrary as the composition of the earth varies from beet grower to beet grower. It is for instance likely that some beet growers deliver beets always showing a measured earth content which is 1 % too low on the account of other beet growers delivering beets with a measured earth content which is too high.

The water content of the earth

Another factor influencing the measuring accuracy is the water binding as water is recognized as beet in the measuring system. Measurements on the earth have indicated water bindings of up to 40 to 50%.

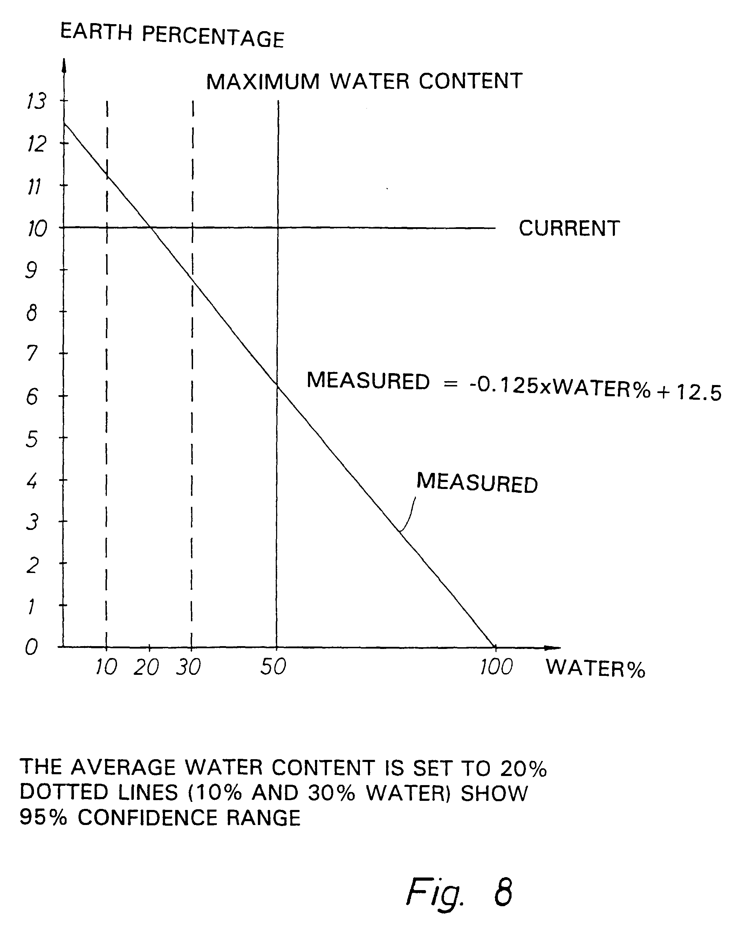

Fig. 8 shows the relation of the actual and the measured earth percentage at various water content in the earth. It is assumed that the average water content is 20% and that the 95% confidence range is 10 to 30% water. When the actual earth percentage is 10%, the measuring accuracy is 0.6% earth.

The water content was measured in three earth samples from the same geographic area. Three different types of earth were involved, viz. humus, clay, and sandy soil. The analyses revealed the following water content:

humus: 20% water
Clay: 16% water
Sandy soil: 12% water.

The most significant difference appears between humus and sandy soil, said difference amounting to 8% water. Based on Fig. 8, the above results in a difference between the measured earth percentages of 1.0% earth when the actual earth percentage is 10%.

Subsequently, the earth samples were suspended in water and drained on a Büsner hopper with a glass fibre filter for two hours, whereafter the following water contents were determined:

Humus: 33% water
Clay: 32% water
Sandy soil: 20% water

The most significant difference is again found between humus and sandy soil and amounts to 13%. Based on Fig. 8, the above results in a difference between the measured earth percentages of 1.6% earth when the actual earth percentage is 10%.

The inaccuracy caused by the water content of the earth is thus neither unsysthematic nor arbitrary because the water binding depends on the type of earth. The beet growers with humus are thus bound to face a too low measured earth percentage on account of the beet growers with sandy soil. According to the analysed samples, the wrong distribution may be in the range of 1 % earth.

The varying water content of the earth presents further requirements to the calibration method. It appears from Fig. 8 that an increase of the average water content from 20 to 30% indicates that the payment to the beet growers includes a beet price covering 1.25% earth. Accordingly, a demand exists for a calibration so as to compensate for the water content at suitable intervals, inter alia in response to the weather conditions.

The last vital factor having an effect on the measuring inaccuracy is found in the measuring system itself. In connection with the sack tests, the reproducability was determined by means of the same beets and the same earth. At a conveyor speed of 0.30 m/sec, the reproducability was set to 0.6%, and at a conveyor speed of 0.54 m/sec the reproducability was set to 1.1 %.

The measuring inaccuracy of the system was considered to be unsysthematic, as contigencies determine the inaccuracy of each measuring. The standard deviation depends, however, on the speed of the conveyor and the content of earth.

When it is assumed that the inaccuracies associated with the composition of the earth, the water content, and the system are independent of one another, the total measuring inaccuracy can be determined by way of a simple addition:

Earth composition (standard deviation): 0.5% earth
Water content (standard deviation): 0.6% earth
The system ( standard deviation): 1.1% earth
The total standard deviation is therefore 2.2%.

The total standard deviation is considered a realistic measurement and agrees very well with the previously determined standard deviation of 2% earth.

A representative selection of various earth compositions and water bindings has been ensured during the calibration in such a manner that the total amount of delivered beets and sugar to the plant is correct.

The earth compositions vary and the water content is therefore also different at varying rainfalls. Accordingly, some beet growers will suffer from a financially unfair treatment, which may have the effect that some beet growers are presented to a measured earth percentage being 1 to 2% too high. When growth-depending variations are to be considered, the measuring system must be extended.

Such a measuring system must be capable of compensating for the water content and the chemical composition of the earth. The compensation requires an earth sample obtained by dry-cleaning the large sample in a drum. The compensation factor is determined by a measuring of the earth sample by means of $y$-transmission. The existing measuring system can optionally also be used for the latter measurement. Fig. 9 illustrates a measuring system comprising measuring units for both a total sample and an earth sample.

The principle of the double measuring is as follows:

By performing a measuring on the large sample, the earth percentage is determined as the mass ratio of hard material to the total sample, where the total sample comprises hard material, beets, and other soft material (including water):

Earth percentage = 100 times the mass of hard material/mass of total sample.

Before the second measuring is performed, the beets are removed, whereby the measuring results in the mass ratio:

Compensation factor = mass of hard material/(mass of hard material

plus other soft material).

Then the corrected earth percentage is:

Earth percentage/compensation factor.

This corrected earth percentage takes into account the composition and the water content of the earth.

Based on the calculation of the total standard deviation it is realistic to refer to a halving of the total standard deviation by introducing the double measuring. The standard deviation resulting from the double measuring is consequently set to 1.1%. At the same time, an unfair treatment of the beet growers is avoided.

## Claims

1. A method of measuring the earth on agricultural crops, such as beets, comprising:

   - a first absorption measurement for determining the content of earth and stones in a beet sample, wherein gamma rays of a first high energy are absorbed to an equal extent by both the earth and the beets, whereas gamma rays of a second low energy are mostly absorbed by the earth, minerals and stones and less absorbed by organic beet material and water; and
   - a second compensating measurement for compensating for the mineral composition and the water content of the earth, wherein the same gamma ray energies are used on an earth/stone sample removed from the beet, so as to determine a compensating factor, the earth persentage determined at said first measurement being divided with said compensation factor.

2.  A method as claimed in claim 1, **characterised** by the second measurement being performed by the beet/earth mixture after the first absorption measurement being transferred to a dry cleaner (12), where an amount of the loose earth and minor stones is removed from the beets and subjected to a corresponding absorption measurement so as to provide the compensation factor.

3.  A method as claimed in claim 1 or 2, **characterised** by the high-energy radiation being emitted by the isotope Cs-137, whereas the low-energy radiation is emitted by the isotope Am-241.


**Patentansprüche**

1.  Verfahren zur Messung der Erde auf Agrarprodukten, wie Rüben, mit:

    -   einer ersten Absorptionsmessung zum Bestimmen des Gehalts von Erde und Steinen in einer Rübenprobe, wobei Gammastrahlen mit einer ersten hohen Energie im gleichen Maße durch sowohl die Erde als auch die Rüben absorbiert werden, während Gammastrahlen einer zweiten niedrigen Energie hauptsächlich durch die Erde, Mineralien und Steine und weniger durch organisches Rübenmaterial und Wasser absorbiert werden, und
    -   einer zweiten Kompensationsmessung zum Kompensieren für die Zusammensetzung der Mineralstoffe und dem Wassergehalt der Erde, wobei die gleichen Gammastrahlungsenergien auf einer Erde/Steinprobe verwendet werden, die von der Rübe entfernt wurde, um einen Kompensationsfaktor zu bestimmen, wobei der in der ersten Messung ermittelte Erdeanteil durch den Kompensationsfaktor dividiert wird.

2.  Verfahren nach Anspruch 1, dadurch gekennzeichnet, daß die zweite Messung mit dem Rüben/Erde-Gemisch nach der ersten Absorptionsmessung und der Übertragung an einen Trockenreiniger (12) ausgeführt wird, wobei eine Menge an loser Erde und geringfügigen Steinen von den Rüben entfernt und einer entsprechenden Absorptionsmessung unterworfen wird, um den Kompensationsfaktor zu erhalten.

3.  Verfahren nach Anspruch 1 oder 2, dadurch gekennzeichnet, daß die Hochenergiestrahlung durch das Isotop Cs-137 emittiert wird, während die Niedrigenergiestrahlung durch das Isotop Am-241 emittiert wird.


**Revendications**

1.  Procédé pour mesurer la terre présente sur des cultures agricoles, telles que des betteraves, comprenant :

    -   une première mesure par absorption pour déterminer la teneur en terre et en pierres dans un échantillon de betterave, selon laquelle des rayons gamma d'une première énergie, élevée sont absorbés à un taux égal, à la fois par la terre et les betteraves, tandis que des rayons gamma d'une seconde énergie, faible sont essentiellement absorbés par la terre, les matières minérales et les pierres et moins absorbés par la matière organique de la betterave et l'eau ; et
    -   une seconde mesure compensatrice pour compenser la composition minérale et la teneur en eau de la terre, selon laquelle les mêmes énergies de rayons gamma sont utilisées sur un échantillon terre/pierre séparé de la betterave, de façon à déterminer un facteur de compensation, le pourcentage de terre déterminé à ladite première mesure étant divisé par ledit facteur de compensation.

2.  Procédé selon la revendication 1, caractérisé en ce que la seconde mesure est réalisée par transfert du mélange betterave/terre après la première mesure par absorption, à un épurateur sec (12), dans lequel une quantité de la terre meuble et des petites pierres est séparée des betteraves et soumise à une mesure par absorption correspondante de façon à fournir le facteur de compensation.

3.  Procédé selon la revendication 1 ou 2, caractérisé en ce que le rayonnement de haute énergie est émis par l'isotope Cs-137, alors que le rayonnement de faible énergie est émis par l'isotope Am-241.

STONE COLLECTOR

CARRIAGEWAY

BEET DEPOT
CARRIAGEWAY

CARRIAGEWAY

→ APPROACH

SPLIT SAMPLER

TEST DEPOT

TEST
WASH

*Fig. 1*

GAMMA MEASURING

CONVEYOR BELT

CHANGE-OVER GATE

CONTAINER
FOR SAMPLES

22

CARRIAGEWAY

BEET DEPOT

Fig. 2

Fig. 3

11

CORRELATION OF R-VALUE TO EARTH PERCENTAGE

EARTH PERCENTAGE = 70.6* R-VALUE -- 176.5
DOTTED LINES SHOWING 95% CONFIDENCE RANGE
STANDARD DEVIATION = 2.0%
CONVEYOR SPEED = 0.54 m/s

*Fig. 4*

CORRELATION OF R-VALUE TO EARTH PERCENTAGE

DOTTED LINES SHOWING 95% CONFIDENCE RANGE
STANDARD DEVIATION = 2.5%
CONVEYOR SPEED = 0.30 m/s

*Fig. 5*

CORRELATION OF R-VALUE TO EARTH PERCENTAGE

DOTTED LINES SHOWING 95% CONFIDENCE RANGE
STANDARD DEVIATION = 2.1%
CONVEYOR SPEED = 0.54 m/s
WHEN USING 3 DETECTORS

*Fig. 6*

CORRELATION OF R-VALUE TO EARTH PERCENTAGE

DOTTED LINES SHOWING 95% CONFIDENCE RANGE
PLUS: DRUM WASH AND CONVEYOR SPEED = 0.54 m/s
SQURE: TEST WASH AND CONVEYOR SPEED = 0.54 m/s

*Fig. 7*

**EARTH PERCENTAGE**

MAXIMUM WATER CONTENT

CURRENT

MEASURED = -0.125×WATER% + 12.5

MEASURED

WATER%

THE AVERAGE WATER CONTENT IS SET TO 20%
DOTTED LINES (10% AND 30% WATER) SHOW
95% CONFIDENCE RANGE

*Fig. 8*

TEST SAMPLER

Fig. 9

SYSTEM A2

SYSTEM B

EARTH +
GRAVEL

BEETS

EARTH

BEETS

BEET DECOMPOSER/
MASS-SEPARATOR

PULP/JUICE

*Fig. 10*